(19) Europäisches Patentamt
European Patent Office
Office européen des brevets

(11) **EP 3 125 544 A1**

(12) **EUROPEAN PATENT APPLICATION**
published in accordance with Art. 153(4) EPC

(43) Date of publication:
**01.02.2017 Bulletin 2017/05**

(51) Int Cl.:
*H04N 7/18* (2006.01)  *B60R 1/00* (2006.01)
*G06T 1/00* (2006.01)  *G06T 3/00* (2006.01)

(21) Application number: **15769792.1**

(22) Date of filing: **15.01.2015**

(86) International application number:
**PCT/JP2015/050892**

(87) International publication number:
**WO 2015/146230 (01.10.2015 Gazette 2015/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.03.2014 JP 2014066268**

(71) Applicant: **Clarion Co., Ltd.**
**Saitama-shi, Saitama 330-0081 (JP)**

(72) Inventors:
• **HIGUCHI, Haruhiko**
**Tokyo 100-8280 (JP)**
• **NAKAJIMA, Mitsuo**
**Tokyo 100-8280 (JP)**
• **UCHIDA, Yoshitaka**
**Saitama-shi**
**Saitama 330-0081 (JP)**
• **NAKAMURA, Hiroyuki**
**Saitama-shi**
**Saitama 330-0081 (JP)**
• **ONOZAKI, Katsuo**
**Saitama-shi**
**Saitama 330-0081 (JP)**
• **SHIOYA, Takayuki**
**Saitama-shi**
**Saitama 330-0081 (JP)**

(74) Representative: **Moore, Graeme Patrick et al**
**Mewburn Ellis LLP**
**City Tower**
**40 Basinghall Street**
**London EC2V 5DE (GB)**

(54) **IMAGE DISPLAY DEVICE AND IMAGE DISPLAY SYSTEM**

(57) An image display device includes: a feature quantity detection condition specifying unit configured to specify a condition for detecting a predetermined feature quantity for an overhead view image of each image obtained by photographing a region in common from at least two different viewpoints; a feature quantity detecting unit configured to detect, by using the specified feature quantity detection condition, the feature quantity for each overhead view image; a blending ratio specifying unit configured to specify, based on the feature quantity, a blending ratio to be used when blending pixels of the overhead view images; and an overhead view image combining unit configured to produce and output a combined overhead view image by blending the pixels of the overhead view images based on the blending ratio.

FIG.1

**Description**

Technical Field

The present invention relates to a technology of an image display device. The present invention claims priority from Japanese Patent Application No. 2014-066268 filed on Mach 27, 2014, the entire contents of which are hereby incorporated by reference for the designated countries allowing incorporation by reference.

Background Art

As the background art of this technical field, there is Japanese Patent Laid-open Publication No. 2009-289185 (Patent Literature 1). In this laid-open publication, there is disclosed "an image display device, comprising: designation means for designating a K-number (K: integer of 2 or more) of cameras each partially having a field of view in common; combining means for combining K-number of subject images respectively output from the K-number of cameras designated by the designating means by referring to a weighting assigned to each of the K-number of cameras; determination means for determining, in association with the designation processing by the designation means, whether or not a moving three-dimensional object is present in the field of view in common; first control means for controlling the weighting of the K-number of cameras in a fixedmanner when a determination result by the determination means is negative; calculation means for calculating an amount of decrease in a distance to the moving three-dimensional object for each of the K-number of cameras when the determination result by the determination means is positive; and second control means for controlling the weighting of the K-number of cameras based on the amount of decrease calculated by the calculation means".

Citation List

Patent Literature

[PTL 1] Japanese Patent Laid-open Publication No. 2009-289185

Summary of Invention

Technical Problem

In the weighted combining method according to the technology described above, there is disclosed only a method involving choosing, for an image portion of an obstacle, the weighting of the image from one of the cameras between 0 and 1 in a binary manner. In the method, when separation processing of the image of the obstacle and a background image fails, a very unnatural combined image is produced. Therefore, there is a need to separate the image of the obstacle and the background image with a very high level of accuracy, and hence the processing amount demands and hardware capability demands are high.

It is an object of the present invention to enable the presence of a three-dimensional object to be easily and accurately detected, and reflected in an overhead view image.

Solution to Problem

This application includes a plurality of means for solving at least a part of the above-mentioned problem. Examples of those means include the following. In order to solve the above-mentioned problem, according to one embodiment of the present invention, there is provided an image display device, including: a feature quantity detection condition specifying unit configured to specify a condition for detecting a predetermined feature quantity for an overhead view image of each image obtained by photographing a region in common from at least two different viewpoints; a feature quantity detecting unit configured to detect, by using the specified feature quantity detection condition, the predetermined feature quantity for each of the overhead view images of the images obtained by photographing the region in common; a blending ratio specifying unit configured to specify, based on the predetermined feature quantity detected by the feature quantity detecting unit, a blending ratio to be used when blending pixels of the overhead view images of the images obtained by photographing the region in common from the at least two different viewpoints; and an overhead view image combining unit configured to produce and output a combined overhead view image by blending the pixels of the overhead view images of the images obtained by photographing the region in common based on the blending ratio specified by the blending ratio specifying unit.

Advantageous Effects of Invention

According to the present invention, the presence of a three-dimensional object can be easily and accurately detected, and reflected in the overhead view image. Objects, configurations, and effects other than those described above become apparent from the following descriptions of embodiments of the present invention.

Brief Description of Drawings

FIG. 1 is a diagram for illustrating a configuration example of an image display device according to an embodiment of the present invention.
FIG. 2 is a diagram for illustrating a hardware configuration example of the image display device.
FIG. 3 is a diagram for illustrating an example of a usage state of the image display device.
FIG. 4 is a diagram for illustrating an output example by the image display device.
FIG. 5 is a diagram for illustrating an outline of detection processing of a feature quantity by the image display device.
FIG. 6 is a diagram for showing a data structure to be stored in a feature quantity detection condition storing unit.
FIG. 7 is a diagram for showing a data structure to be stored in a blend information storing unit.
FIG. 8 is a diagram for illustrating a relationship between a scanning direction of a feature quantity and a rotation amount of an image.
FIG. 9 is a diagram for illustrating an example of a scanning direction of a feature quantity on a concentric circle, and realization means thereof.
FIG. 10 is a diagram for illustrating a processing flow of blending ratio decision processing.
FIG. 11 is a diagram for illustrating a screen example in which overhead view images are combined by blending based on the feature quantities.
FIG. 12 is a diagram for illustrating a screen example in which overhead view images are combined by selecting an image.
FIG. 13 is a diagram for illustrating an example of changes in the blending ratio based on changes in a three-dimensional object over time.
FIG. 14 is a diagram for illustrating a setting example of a region to be photographed by the image display device.

Description of Embodiments

An example of an image display device 100 to which an embodiment of the present invention is applied, and an image display system 1 including the image display device 100, is now described with reference to the drawings.

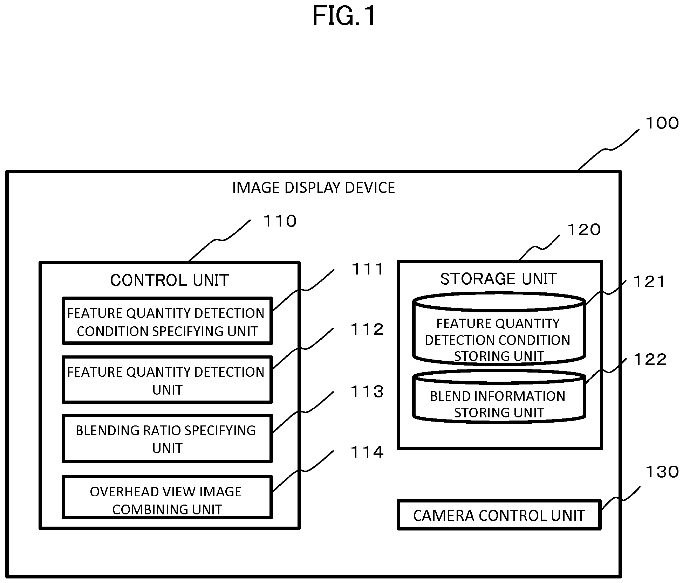

FIG. 1 is a diagram for illustrating a configuration example of the image display device 100 to which a first embodiment of the present invention is applied. The image display device 100 includes a control unit 110, a storage unit 120, and a camera control unit 130. The image display device 100 is a terminal configured to display an overhead view image to a user. For example, the image display device 100 is typically a navigation device, a vehicle control device, and the like. The image display device 100 is configured to display the overhead view image as if the user is looking down from the sky by using images obtained by photographing the surroundings of the vehicle. However, the image display device 100 is not limited to the above-mentioned examples, and may be an electronic information terminal, e.g., a personal computer device, a mobile telephone terminal, a tablet terminal, or a personal digital assistant (PDA).
The control unit 110 is configured to perform basic control of the image display device 100. For example, the control unit 110 is responsible for performing supervisory functions, e.g., overall power management of the image display device 100, and control and task management of various devices by an operating system. The control unit 110 includes a feature quantity detection condition specifying unit 111, a feature quantity detecting unit 112, a blending ratio specifying unit 113, and an overhead view image combining unit 114. The feature quantity detection condition specifying unit 111 is configured to specify a suitable condition in order to detect a feature quantity of an image. The feature quantity detection condition may be, for example, information for specifying in detail a scanning direction of an image in order to more accurately detect the feature quantity. The feature quantity detection condition is described in more detail later.
The feature quantity detecting unit 112 is configured to detect a predetermined feature quantity relating to the image. Specifically, for example, the feature quantity may be a ratio of the surface area of a three-dimensional object on the screen.
The blending ratio specifying unit 113 is configured to specify a weighting of the data among each of the images to be used when producing an overhead view image by combining a plurality of images obtained by photographing a region in common from different viewpoint positions. Specifically, the blending ratio specifying unit 113 is configured to specify a blending ratio based on, for example, whether or not a correlation can be seen in the feature quantity among each of the images, and whether or not the region in which the feature quantity can be seen in each of the images includes the same position in the region in common.

The overhead view image combining unit 114 is configured to output a combined overhead view image by blending the pixels of a plurality of images obtained by photographing a region in common based on the blending ratios specified by the blending ratio specifying unit 113.

The storage unit 120 includes a feature quantity detection condition storing unit 121 and a blend information storing unit 122.

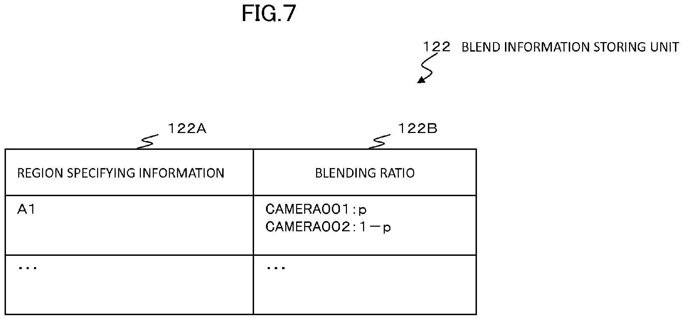

The feature quantity detection condition storing unit 121 is configured to store a condition to be applied when detecting the feature quantity based on a combination of information for specifying the region to be photographed and a viewpoint position for photographing the region. The feature quantity detection condition storing unit 121 is described in more detail in the description of FIG. 7, which is given later.

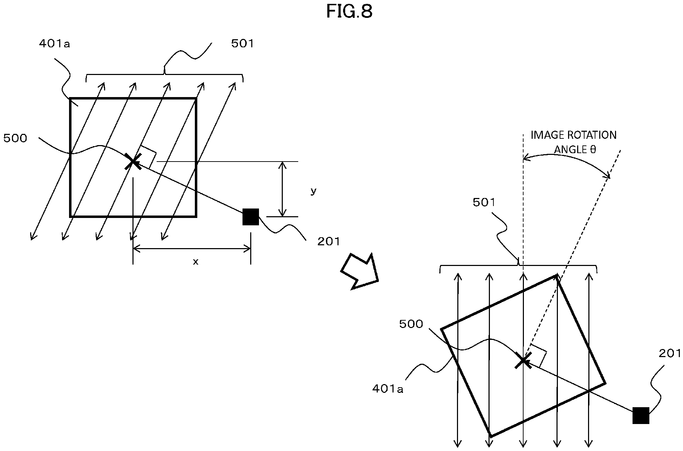

The blend information storing unit 122 is configured to store the information for specifying the region to be photographed and information on the blending ratios among the viewpoint positions for photographing the region. The blend information storing unit 122 is described in more detail in the description of FIG. 8, which is given later.

The camera control unit 130 is configured to issue various control instructions, including instructions to start photographing and to finish photographing, to a camera capable of providing images to the image display device 100, and to acquire an image output from the camera. An outline of the configuration of the image display device 100 has been described above.

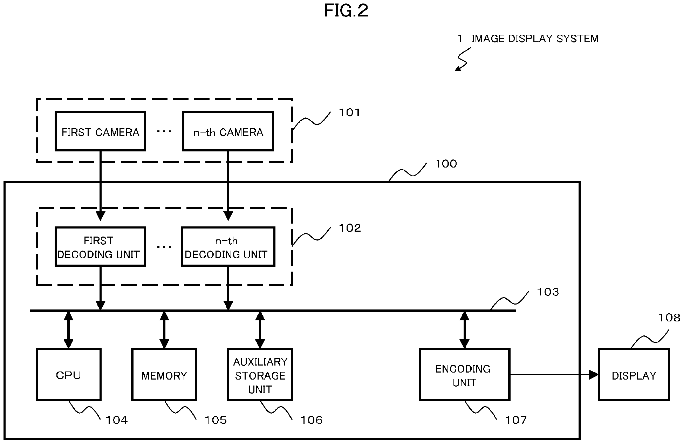

FIG. 2 is a diagram for illustrating a hardware configuration example of the image display device 100 to which the first embodiment of the present invention is applied, and of the image display system 1 including the image display device 100.

The image display system 1 includes the image display device 100, a camera group 101, and a display 108. The camera group 101 includes a plurality of cameras, from a first camera to an n-th camera (n is an integer). The image display system 1 is typically configured to photograph images of the vehicle surroundings by a plurality (n-number) of cameras mounted on the vehicle, combine the photographed images from each of the cameras by the image display device 100, and display an overhead view image of the surroundings of the vehicle by the display 108. The camera group 101 is not limited to cameras that are capable of mainly capturing visible light. For example, the camera group 101 may include cameras, such as night vision cameras, that are sensitive to infrared light and are configured to output the captured infrared light as an image.

The image display device 100 includes a decoding unit group 102 including one or a plurality of decoding units, a central processing unit (CPU) 104, a memory 105, an auxiliary storage device 106, and an encoding unit 107. Images transmitted from each of the cameras configuring the camera group 101 are decoded by the decoding unit group 102, which includes a decoding unit corresponding to each of the cameras in the camera group 101, and are then stored in the memory 105 via a bus 103. The photographed images that are from each of the cameras and stored in the memory 105 are combined by the CPU 104, and used to produce an overhead view image of the surroundings of the vehicle. The combined overhead view image is encoded by the encoding unit 107, and reproduced by the display 108.

The feature quantity detection condition specifying unit 111, the feature quantity detecting unit 112, the blending ratio specifying unit 113, the overhead view image combining unit 114, and the camera control unit 130 are realized by the CPU 104. Further, the feature quantity detection condition storing unit 121 and the blend information storing unit 122 are realized by the auxiliary storage device 106 and the memory 105.

In addition, the CPU 104 may be configured to produce images to be used to form a part of the overhead view images by using the images from each camera by performing, for example, correction processing of distortion generated by an optical system and perspective transformation processing on an image obtained by a camera having a field of view that is equal to or wider than a predetermined field of view. The CPU 104 is responsible for the processing for producing an overhead view image of the entire surroundings of the vehicle by performing processing such as cutting, combining, and alpha-blending of those overhead view images.

The CPU 104 is also configured to perform processing for detecting the presence of white lines drawn on the road, obstacles, pedestrians, and the like, and for detecting the size of the surface area of those objects shown in an image by performing various types of image processing on the photographed image data, such as edge extraction, contour extraction, Gaussian processing, noise removal processing, and threshold processing.

The encoding unit 107 is configured to encode the produced overhead view image. The display 108 is configured to display the overhead view image output from the image display device 100. The display 108 is, for example, a liquid crystal display (LCD) . However, the display 108 is not limited to this, and may be some other type of display, such as a cathode ray tube (CRT), a liquid crystal on silicon (LCOS) display, an organic light-emitting diode (OLED) display, a holographic optical element, and a projector device. Further, the display 108 may be a flat monitor, a head-up display (HUD), a head-mounted display (HMD), and the like.

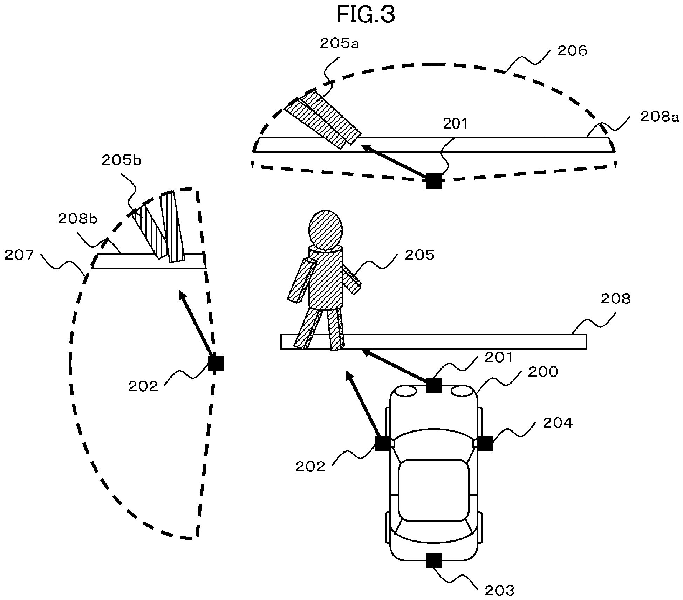

FIG. 3 is a diagram for illustrating an example of a usage state of the image display device. In this usage state, an example of an image obtained by photographing the same object 205 by a plurality of cameras arranged on a vehicle 200 is illustrated. This example is an illustration of a state in which a front camera 201, a left-side camera 202, a rear camera 203, and a right-side camera 204 are mounted on the vehicle 200, and a pedestrian (object 205) has walked in front of the vehicle 200 diagonally to the left.

In this state, the image photographed by the front camera 201, which is mounted on the vehicle 200 facing in the forward direction that the vehicle travels, and converted into an overhead view image, is a front image 206, and the image photographed by the left-side camera 202 and converted into an overhead view image is a left-side image 207. The front camera 201 and the left-side camera 202 are mounted by tilting at a predetermined angle in the vertically downward direction so as to ensure a diagonally-downward (ground direction) field of view. It is to be understood that, although not shown, the image photographed by the rear camera 203 and converted into an overhead view image is produced as a rear image, and the image photographed by the right-side camera 204 and converted into an overhead view image is produced as a right-side image.

In this example, a leg portion of the object (pedestrian) 205 is included as a front leg image 205a in the front image 206 and as a left-side leg image 205b in the left-side image 207, respectively.

In general, in the processing for producing an overhead view image, correction processing of lens distortion occurring at an image edge portion and perspective transformation for changing the magnification ratio based on the depth distance are performed on the images photographed by the cameras. As a result, a three-dimensional object in the overhead view image is photographed as if the object has been stretched. In the front image 206 photographed by the front camera 201, the three-dimensional object is displayed extending in the direction of the arrow from the front camera 201 like the front leg image 205a. Similarly, in the left-side image 207 photographed by the left-side camera 202, the three-dimensional object is displayed extending in the direction of the arrow from the left-side camera 202 like the left-side leg image 205b. In other words, the object (pedestrian) 205, which originally is the same object, is displayed as the front leg image 205a and the left-side leg image 205b extending in different directions due to differences in the viewpoint positions of the cameras in the overhead view images. This phenomenon occurs due to the fact that the object (pedestrian) 205 is a three-dimensional object. When the object is not a three-dimensional object, for example, in the case of a flat pattern drawn on the road, such as a white line 208, the object is photographed without any differences in shape in the overhead view images, as shown by white lines 208a and 208b in the overhead view images. Further, the white lines 208a and 208b may be superimposed on each other by aligning their positions.

More specifically, when the same object is photographed from different directions and converted into overhead view images, and a feature indicating that the shape of the object extends in different directions is detected by comparing the two images, a three-dimensional object may be considered to be present. When a feature indicating that there is no difference in the shape of the object in the two images is detected, it may be determined that a roughly flat object is present on the road. Further, the direction in which the shape of the three-dimensional object extends in an overhead view image is determined based on the positional relationship between the camera and the three-dimensional object, as shown by the direction of the arrows extending from the front camera 201 and the left-side camera 202. Therefore, the direction in which the shape of the three-dimensional object extends in the overhead view images can be said to be an important determination condition for determining the presence of a three-dimensional object based on the detected images. In this embodiment, in view of this characteristic, a processing condition to be used when detecting a feature is decided based on the positional relationship between the camera, namely, the viewpoint position, and the three-dimensional object. As a result, it can be said that the extraction accuracy of the three-dimensional object is improved, and that blend processing can be performed that enables an overlapping portion of a plurality of camera images to be seen more easily.

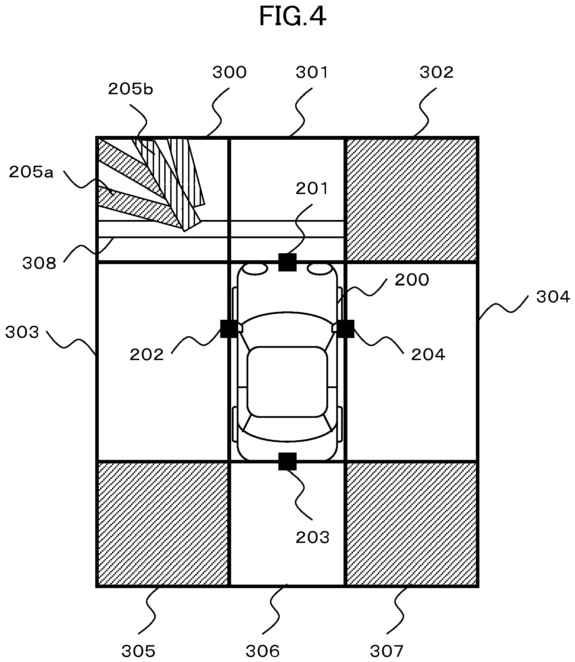

FIG. 4 is a diagram for illustrating an output example of an overhead view image by the image display device 100. In the overhead view image, the photographed region is divided into predetermined regions, and an image of an overlapping region photographed by another camera is displayed by performing some kind of image combining. In FIG. 4, the surroundings of the vehicle 200 are divided into eight areas (front left area 300, front area 301, front right area 302, left area 303, right area 304, rear left area 305, rear area 306, and rear right area 307). In this case, the areas photographed by the front camera 201 are the front left area 300, the front area 301, and the front right area 302. Further, the areas photographed by the left-side camera 202 are the front left area 300, the left area 303, and the rear left area 305. The other areas are also determined in the same manner based on the viewpoint position, direction, and angle of view of the rear camera 203 and the right-side camera 204.

In this case, the front left area 300 is an area in which the images obtained by the front camera 201 and the left-side camera 202 overlap (in the following description, a region photographed in common in such a manner by a plurality of cameras is referred to as an "overlapping area"). Similarly, the front right area 302, the rear left area 305, and the rear right area 307 can also be said to be an overlapping area photographed in common by a plurality of cameras. In FIG. 4, the front right area 302, the rear left area 305, and the rear right area 307 are displayed as diagonal lines. However, in actual practice, the photographed object is displayed in those areas.

Considering the point that, as described above, a three-dimensional object is represented in an overhead view image extending in a direction that is based on the viewpoint direction, when the ground is flat with no protrusions (three-dimensional objects), it can be said that the images of the area in common are basically identical, and hence can be superimposed on each other.

The white lines 208a and 208b in the overhead view images of FIG. 3 are flat. Therefore, in the overhead view images, a white line 308 can be displayed superimposed on the same position. On the other hand, when a three-dimensional object (e.g., a pedestrian) is present in the front left area 300, which is an overlapping area, the presence of the three-dimensional object is prevented frombeing lost by performing blend processing on the front leg image 205a and the left-side leg image 205b of the pedestrian, who is the three-dimensional object, based on predetermined blending ratios, and displaying the blended images. As a result, the loss of a part of an image having a three-dimensional object can be avoided.

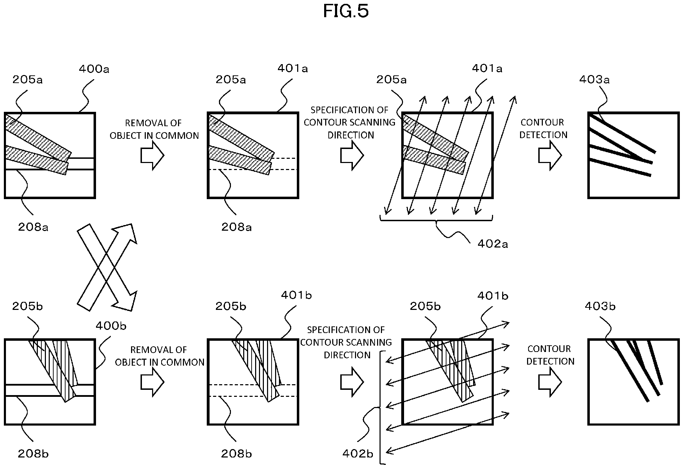

FIG. 5 is a diagram for illustrating an outline of detection processing of a feature quantity by the image display device100. When extracting a three-dimensional object from an image in an overlapping area, the feature quantity detection condition specifying unit 111 and the feature quantity detecting unit 112 perform detection processing of the feature quantity. A front image 400a is an image photographed by the front camera 201 and converted into an overhead view image. A left-side image 400b is an image photographed by the left-side camera 202 and converted into an overhead view image. As described above, in the front image 400a and the left-side image 400b, which have been converted into overhead view images, a three-dimensional object is displayed extending in different directions due to differences in viewpoint positions, but an object on the road is displayed in an overlapping position. Therefore, the overhead view image combining unit 114 is configured to perform processing on the other image obtained by photographing the overlapping area, which is a region in common, in order to remove objects in common from each of the images. As a result, a front three-dimensional object image 401a and a left-side three-dimensional object image 401b can each be obtained from which objects in common (flat objects) have been removed. This processing is realized by the overhead view image combining unit 114 removing from each image information on portions in common relating to a range corresponding to another image.

Specifically, the three-dimensional objects (front leg image 205a and left-side leg image 205b) shown in the front three-dimensional object image 401a and the left-side three-dimensional object image 401b, respectively, can be kept as a difference, and the objects 208a and 208b on the road can be removed as portions in common.

In order to accurately extract the three-dimensional object, the feature quantity detection condition specifying unit 111 is configured to specify a suitable detection condition. More specifically, due to the above-mentioned characteristic, the direction in which a contour of the three-dimensional object extends is based on the direction of the viewpoint position as seen from the overlapping area, and hence it can be said that a detection condition for efficiently increasing extraction accuracy is a detection condition that specifies a suitable contour scanning direction. Therefore, the feature quantity detection condition specifying unit 111 is configured to specify the feature quantity detection condition based on a geometric relationship between the viewpoint position and the region in common. Specifically, the feature quantity detection condition specifying unit 111 is configured to specify the contour scanning direction to be used in feature quantity detection based on the viewpoint position and the direction of the viewpoint position as seen from the region in common.

In general, contour extraction processing is performed by scanning a change amount of elements forming the image, such as brightness, the values of red, green, and blue (RGB), or the values of cyan, magenta, and yellow (CMY), in a predetermined direction (usually, the horizontal pixel direction) of the image. When the scanning direction and the detected object are in an orthogonal state, a high detection accuracy is often obtained. In view of this, the feature quantity detection condition specifying unit 111 is configured to set the detection condition in order to scan in an orthogonal manner to the extension direction of the contour of the three-dimensional object.

Further, the feature quantity detection condition specifying unit 111 is configured to specify a contour scanning direction 402a for the front three-dimensional object image 401a and a contour scanning direction 402b for the left-side three-dimensional object image 401b.

The feature quantity detecting unit 112 is configured to detect contours 403a and 403b by scanning the front three-dimensional object image 401a based on the specified contour scanning direction 402a, and the left-side three-dimensional object image 401b based on the specified contour scanning direction 402b. An outline of the detection processing of the feature quantity has been described above.

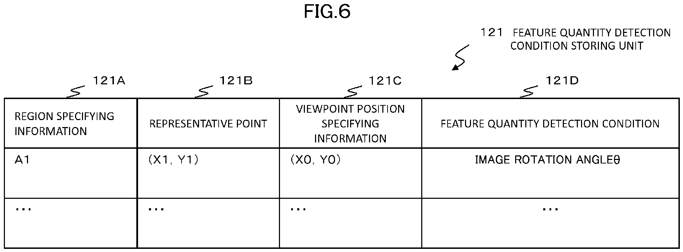

FIG. 6 is a diagram for showing a data structure to be stored in the feature quantity detection condition storing unit 121. The feature quantity detection condition storing unit 121 is configured to associate and store region specifying information 121A, a representative point 121B, viewpoint position specifying information 121C, and a feature quantity detection condition 121D. The region specifying information 121A is information for specifying a region to be photographed in common in a plurality of images. The representative point 121B is a point representing the region specified by the region specifying information 121A. The position specified by the representative point 121B may be, for example, a weighted center of the region, the center of the region, or any one of the apexes of the region. The representative point 121B is not limited to a weighted center of a photographed area, and for example, the representative point 121B may be the most distant point from the camera or the closest point to the camera in the photographed area, or a point on an object detected in the photographed area.

The viewpoint position specifying information 121C is information for specifying the viewpoint position, namely, the position of the camera. The feature quantity detection condition 121D is a condition to be used in order to detect the feature quantity. For example, a condition indicating that an image rotation angle is to be applied as $\theta$ ($\theta$ is a difference in the angle between the extension direction of the straight line orthogonal to a line segment from the viewpoint position to the representative point of the region and the direction for scanning the change amount of brightness in contour extraction processing) is stored in advance in the feature quantity detection condition 121D.

FIG. 7 is a diagram for showing a data structure to be stored in the blend information storing unit 122. The blend information storing unit 122 is configured to associate and store region specifying information 122A and a blending ratio 122B. The region specifying information 122A is information for specifying a region to be photographed in common in a plurality of images. The blending ratio 122B is information for specifying a weighting among the images when using a plurality of images to output the combined region specified by the region specifying information 121A. For example, the blending ratio 122B is information for designating that blending is to be performed by using a weighting between an image photographed by a "camera 001" and an image photographed by a "camera 002" based on the ratio of "p:(1-p)" (p is a number of from 0 to 1).

Strictly speaking, the direction on the image when a three-dimensional object is photographed so as to extend in the front image 400a depends on the position in the area. However, the calculation processing load may be reduced by assuming this direction to be the same and setting the contour scanning direction to be the same.

FIG. 8 is a diagram for illustrating a relationship between a scanning direction of a feature quantity and a rotation amount of an image. In other words, in FIG. 8, an outline of the specific method used in the processing for detecting a contour by scanning the front three-dimensional object image 401a based on a contour scanning direction 501 is illustrated. In this case, the front three-dimensional object image 401a includes a weighted center 500 that is shifted from the front camera (viewpoint position) 201 by x in the horizontal direction and y in the vertical direction. As a result, the feature quantity detection condition specifying unit 111 is configured to set the contour scanning direction 501 in a direction orthogonal to the line segment connecting the front camera (viewpoint position) 201 and the weighted center 500.

In this processing, the feature quantity detection condition specifying unit 111 is configured to rotate the front three-dimensional object image 401a by the image rotation angle $\theta$, which is shown in the feature quantity detection condition 121D, about the weighted center 500, which is the representative point of the front three-dimensional object image 401a, as the center of rotation. However, the feature quantity detection condition specifying unit 111 is not limited to this. The feature quantity detection condition specifying unit 111 may also be configured to rotate the processing image itself by an angle decided based on the positional relationship between the camera position and the photographed area, and then detect edges in common.

As described above, the image rotation angle $\theta$ is the difference in the angle between the extension direction of the straight line orthogonal to a line segment from the viewpoint position to the representative point of the region and the direction for scanning the change amount in brightness in the contour extraction processing. As a result, the direction (horizontal or vertical) for scanning the change amount in brightness and the contour scanning direction 501 can be made parallel, which allows a high accuracy to be obtained for the contour extraction. The rotation amount may be set to an optimum angle for each camera or for each photography direction. For example, in the case of a rear camera, when scanning in the vertical direction is suitable (e. g. , positioning when parking a vehicle in a garage etc.), the image rotation angle $\theta$ may be determined so that the contour scanning direction is the vertical direction.

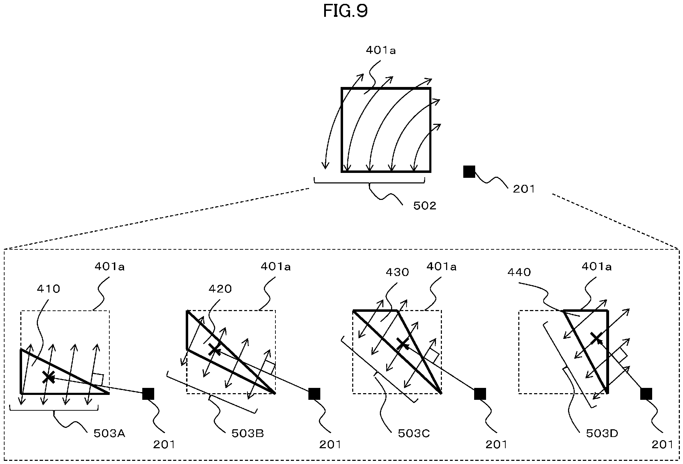

FIG. 9 is a diagram for illustrating an example of a scanning direction of a feature quantity on a concentric circle, and realization means thereof. In other words, in FIG. 9, a setting example of the extraction direction in order to enable even higher detection accuracy in the above-mentioned processing for detecting the contour is illustrated. FIG. 9 is an example for illustrating of a method in which, when extracting the contour from the front three-dimensional object image 401a, the scanning direction is set so as to be as close as possible to a tangential direction of a concentric circle about the front camera (viewpoint position) 201. Finely dividing and scanning one region in this manner enables the contour of a three-dimensional object to be detected by scanning in the direction roughly orthogonal to the extension direction of the contour.

Specifically, in the case of performing the setting based on a front three-dimensional object image 401a obtained by converting an overlapping area photographed by the front camera 201 and converted into an overhead view image, in FIG. 9, a contour scanning direction 502 is set to the tangential direction of the concentric circle from the front camera (viewpoint position) 201 for the front three-dimensional object image 401a. As the setting method, when regions 410 to 440 obtained by finely dividing the front three-dimensional object image 401a along straight lines passing through an apex close to the viewpoint position are further set in advance, the feature quantity detection condition specifying unit 111 can specify and set scanning directions 503A to 503D of directions orthogonal to a line segment connecting the weighted center and the front camera (viewpoint position) 201 for each region, and accurately detect the contour.

The direction in which the three-dimensional object extends is, basically, the extension direction of the line segment connecting the camera and the position of the three-dimensional object in contact with the ground. In the method illustrated in FIG. 9, because the contour scanning directions are different in the plane of the front three-dimensional object image 401a, there is a need to change the image display method of the contour extraction filter and the like in accordance with the search region in the image, and hence the calculation processing load increases. However, because contour extraction processing can be performed by setting the contour scanning direction to be roughly orthogonal to the direction in which the three-dimensional object extends, a high extraction accuracy for the three-dimensional object can be obtained.

The method of setting the contour scanning direction is not limited to the examples illustrated in FIG. 8 and FIG. 9. For example, a filter coefficient of an edge detection filter, such as a Laplacian filter and a Sobel filter, may be decided based on the positional relationship between the viewpoint position of the front camera 201 and the overlapping area. This method enables contour extraction to be performed more accurately.

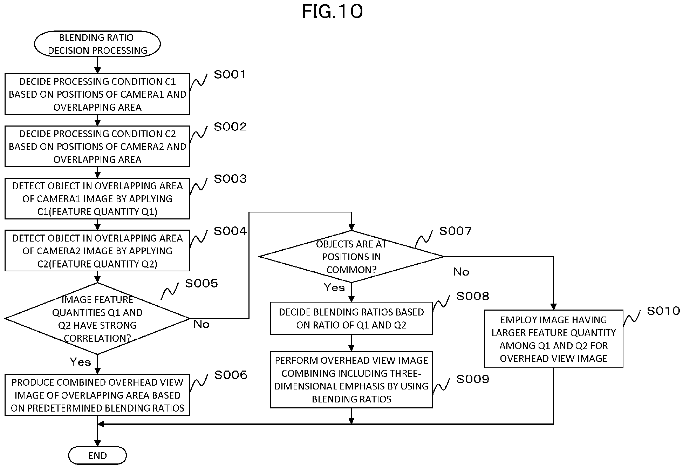

FIG. 10 is an example of processing for, among an operation sequence of image combining in an overlapping area, deciding a blending ratio. In this example, an overhead view image obtained by the front camera 201, which is a "camera 1", and an overhead view image obtained by the left-side camera 202, which is a "camera 2", are combined for the front left area 300, which is a region photographed in common among the regions photographed using the camera 1 and the camera 2.

First, based on a positional relationship between the camera 1 and the overlapping area, the feature quantity detection condition specifying unit 111 decides a processing condition C1 of the overhead view image obtained based on the camera 1 (Step S001). Specifically, the feature quantity detection condition specifying unit 111 refers to the feature quantity detection condition storing unit 121, and reads the feature quantity detection condition 121D that matches the combination of the region specifying information 121A corresponding to the overlapping area and the viewpoint position specifying information 121C corresponding to the mounted position of the camera 1.

Then, based on a positional relationship between the camera 2 and the overlapping area, the feature quantity detection condition specifying unit 111 decides a processing condition C2 of the overhead view image obtained based on the camera 2 (Step S002). Specifically, the feature quantity detection condition specifying unit 111 refers to the feature quantity detection condition storing unit 121, and reads the feature quantity detection condition 121D that matches the combination of the region specifying information 121A corresponding to the overlapping area and the viewpoint position specifying information 121C corresponding to the mounted position of the camera 2.

Then, the feature quantity detecting unit 112 uses the processing condition C1 to detect a three-dimensional object present in the overlapping area of the overhead view image obtained based on the camera 1 (Step S003). Note that, the detected three-dimensional object has an image feature quantity Q. Specifically, the feature quantity detecting unit 112 specifies the contour of the three-dimensional object by applying the processing condition C1 on the overhead view image obtained based on the camera 1, and scanning in the contour scanning direction under a state satisfying the processing condition C1. During this processing, the feature quantity detecting unit 112 extracts the image feature quantity by performing, for example, contour extraction using a portion having many edges and the like, a Laplacian filter, or a Sobel filter, binarization processing, or various types of pattern recognition processing using color information, histogram information, and the like. Further, the feature quantity detecting unit 112 specifies the image feature quantity Q, which may be a position of pixels from which an edge or a contour was successfully extracted, a brightness level of the edge, and the like.

Then, the feature quantity detecting unit 112 uses the processing condition C2 to detect a three-dimensional object present in the overlapping area of the overhead view image obtained based on the camera 2 (Step S004). Note that, the detected three-dimensional object has an image feature quantity Q2. Specifically, the feature quantity detecting unit 112 specifies the contour of the three-dimensional object by applying the processing condition C2 on the overhead view image obtained based on the camera 2, and scanning in the contour scanning direction under a state satisfying the processing condition C2. During this processing, the feature quantity detecting unit 112 extracts the image feature quantity by performing, for example, contour extraction using a portion having many edges and the like, a Laplacian filter, or a Sobel filter, binarization processing, or various types of pattern recognition processing using color information, histogram information, and the like. Further, the feature quantity detecting unit 112 specifies the image feature quantity Q2, which may be a position of pixels from which an edge or a contour was successfully extracted, a brightness level of the edge, and the like.

For any one of the image feature quantities Q1 and Q2, an image feature quantity obtained by a scale-invariant feature transform (SIFT), a histogram of oriented gradients (HOG), or the like, may be utilized. Further, a selection may be made regarding whether feature information that was successfully extracted by combining a HOG feature quantity and a feature quantity of the shape of the pedestrian is information on a person, such as a pedestrian, or on an inanimate object. Thus, information that is more useful can be presented to a driver by switching contrast enhancement processing or the output content, such as a danger level indication, based on whether or not the object is a pedestrian or an inanimate object.

Next, the blending ratio specifying unit 113 determines whether or not the image feature quantities Q1 and Q2 have a correlation equal to or stronger than a predetermined level (Step S005). Specifically, the blending ratio specifying unit 113 determines whether or not the pixel positions of the detected object match or are gathered in a given range, and whether or not a feature quantity difference is within a predetermined range. This processing may be performed by determining a correlation of a spatial distance relationship or a semantic distance relationship by performing hitherto-existing statistical processing or clustering processing.

When the correlation is equal to or stronger than the predetermined level ("Yes" in Step S005), the blending ratio specifying unit 113 decides that a three-dimensional object is not present in the overlapping area, and hence the overhead view images of the overlapping area are to be combined at the predetermined blending ratios by using the overhead view image obtained based on the camera 1 and the overhead view image obtained based on the camera 2. The blending ratio specifying unit 113 then causes the overhead view image combining unit 114 to combine the overhead view images of the overlapping area (Step S006). In this case, when combining so that the blending ratio for any one of the overhead view images is "0", this essentially enables the overhead view image obtained based on any one of the camera 1 and the camera 2 to be selected and used. However, when a three-dimensional object is present near a joint of the overhead view images, the image of the three-dimensional object may disappear. As a result, rather than producing the overhead view image by selectively utilizing any one of the overhead view images, it is preferred that the overhead view images be blended and combined based on a predetermined "non-zero" blending ratio.

Further, the overhead view image combining unit 114 weights, based on the blending ratios, information (e.g., brightness information or RGB information) on pixels at positions corresponding to the overhead view image obtained based on the camera 1 and the overhead view image obtained based on the camera 2, and combines the pixel information into one overhead view image. When the combined overhead view image has been produced, the overhead view image combining unit 114 finishes the blending ratio decision processing. The combined overhead view image is then output by transmitting the image to the encoding unit 107 and the display 108.

When the correlation is not equal to or stronger than the predetermined level ("No" in Step S005), the blending ratio specifying unit 113 specifies the positions in the overlapping area in which the three-dimensional object included in the overhead view image obtained based on the camera 1 and the three-dimensional object included in the overhead view image obtained based on the camera 2 are present, and determines whether or not those three-dimensional objects are at positions that are in common by a predetermined level or more (Step S007). In other words, the blending ratio specifying unit 113 determines whether or not, in the region in common, there is a region in which the feature quantity of the image obtained from each camera overlaps by a predetermined degree or more.

When the three-dimensional objects are in a position in common ("Yes" in Step S007), the blending ratio specifying unit 113 decides the blending ratios based on the image feature quantities Q1 and Q2 (Step S008). Specifically, the blending ratio specifying unit 113, first, performs a predetermined operation on the image feature quantity Q1 obtained based on the camera 1, and the result of the operation is represented by F(Q1). Similarly, a result obtained by performing a predetermined operation on the image feature quantity Q2 obtained based on the camera 2 is represented by F(Q2). Further, based on Expression (1), the blending ratio specifying unit 113 specifies a combining weighting ratio that is based on the image feature quantity Q1 obtained based on the camera 1.

$$\mathrm{Combining\ weighting\ } P1=F(Q1)/(F(Q1)+F(Q2)) \quad \cdots$$

Expression (1)

Similarly, based on Expression (2), the blending ratio specifying unit 113 specifies a combining weighting ratio that is based on the image feature quantity Q2 obtained based on the camera 2.

$$\mathrm{Combining\ weighting\ } P2=F(Q2)/(F(Q1)+F(Q2)) \quad \cdots$$

Expression (2)

The above-mentioned predetermined operator F may be an operator for extracting and counting, in the overlapping area, the number of pixels of an image having a feature quantity that is equal to or more than a predetermined threshold. In this case, the size of each of the images of the three-dimensional object in the overlapping area of the overhead view image obtained based on the camera 1 and the overhead view image obtained based on the camera 2 may be used as an element for varying the blending ratio.

Further, the predetermined operator F may also be an operator for calculating a sum, an average, a weighted average, a weighted center, a center value, and the like, of the image feature quantity of the pixels in the overlapping area of the overhead view image obtained based on the camera 1 and the overhead view image obtained based on the camera 2. In this case, not only the size of the image of the three-dimensional objects in the overlapping area, but the magnitude of the value of the feature quantity may also be used as an element for varying the blending ratio.

The blending ratio may also be decided for each pixel. In this case, a feature quantity per se of a relevant pixel may be used as F(Q1), and a feature quantity per se of a relevant pixel may be used as F(Q2). The blending ratio may also be decided by comparing F(Q1) and F(Q2) for each pixel, and setting so that the image having the larger value has a larger blending ratio.

Further, for example, even when the ratio of the blending ratio feature quantity of the overhead view image obtained based on the camera 1 is continuously changing, for the portion in which the "ratio of the feature quantity" is closer to 0.5, the gradient of the change in the blending ratio may be set to be larger. Calculating the blending ratio in this manner enables the contrast of an image that stands out more (an image in which there is a high likelihood of a three-dimensional object being present) to be enhanced, while also allowing the blending ratio to be switched gently when the "ratio of the feature quantity" changes. As a result, there is an effect that an image in which there is a comparatively high likelihood of a three-dimensional object being present can be recognized by the user more easily.

In addition, for example, even when the ratio of the blending ratio feature quantity of the overhead view image obtained based on the camera 1 is continuously changing, when the ratio of the feature quantity has increased to a predetermined level or more or has decreased to a predetermined level or less, the blending ratio of the overhead view image having the larger feature quantity may be set to 1, and the blending ratio of the other overhead view image may be set to 0. Calculating the blending ratio in this manner enables the contrast of an image that stands out more (an image in which there is a high likelihood of a three-dimensional object being present) to be further enhanced, while also allowing the blending ratio to be switched gently when the ratio of the feature quantity changes. As a result, there is an effect that an image in which there is a comparatively high likelihood of a three-dimensional object being present can be recognized by the user still more easily.

Still further, when the ratio of the feature quantity changes, the blending ratio may be set to be switched in steps. In this case, the switch in the blending ratio becomes gentler as the number of switching steps increases. Thus, even a case in which the change in the blending ratio with respect to the change in the ratio of the feature quantity is not continuous, such as when the blending ratio is switched in steps based on a change in the ratio of the feature quantity, may be an embodiment of the present invention.

Note that, regarding the operator F, a case has been described in which the value of the operation result increases for images in which there is a high likelihood that a three-dimensional object is present. However, the opposite may also be performed, that is, the operator F may be an operator for which the value of the operation result decreases for images in which there is a high likelihood that a three-dimensional object is present.

Thus, even for an image of a three-dimensional object portion, multiple values may be used as the blending ratio. As a result, even the three-dimensional object portion may be combined more naturally based on the likelihood that a three-dimensional object is present.

Further, because the blending ratio may be calculated for a whole overlapping area or for pixel units, and the blending ratio may be used in combining processing of the whole overlapping area or of pixel units, the occurrence of unnatural image joints, such as a boundary line, in the overlapping area can be avoided. As a result, a more natural combined image can be produced.

In addition, the blending ratio may be decided based on another method. In this another method, the distances from a pixel position in the front left area 300 to each of the front camera 201, which is the "camera 1", and the left-side camera 202, which is the "camera 2", are respectively represented by d1 and d2, and a fixed blending ratio is set based on the ratio between the distance d1 and the distance d2. In other words, the blending ratio of the image from the front camera 201 may be set larger for a pixel position that is a closer distance to the front camera 201 (i.e., d1<d2), which is the "camera 1". For example, the blending ratio of the image from the front camera 201 may be decided based on the expression "P1=d2/(d1+d2)", and the blending ratio of the image from the left-side camera 202 may be decided based on the expression "P2=d1/(d1+d2)".

However, in this case, because there is a high likelihood of increased image blur and distortion at pixel positions that are too close to the camera, it is preferred that the blending ratio for pixel positions that are too close by a predetermined amount or more be corrected so as to increase the weighting of the overhead view image photographed by the camera that is more further away. In other words, when an approach limit threshold is represented by dth (d1 minimum value≤dth≤d1 maximum value), for positions in which d1<d2 and d1<dth, the blending ratio P1 of the overhead view image based on the closer front camera 201 may be corrected so as to be lower. For example, substituting the blending ratios P1 and P2 set as described above, the blending ratio of the image from the front camera 201 may be decided based on the expression "P1=d1/(d1+d2)". Then, the blending ratio of the image from the left-side camera 202 may be decided based on the expression "P2=d2 / (d1+d2)". As a result, an overhead view image having reduced image blur and distortion, which occur at positions too close to the camera, may be displayed.

Next, the overhead view image combining unit 114 performs overhead view image combining including representations to be emphasized, such as highlighting the presence of a three-dimensional object, by using the blending ratios (Step S009). Specifically, the overhead view image combining unit 114 weights, based on the decided blending ratios, information (e.g., brightness information or RGB information) on the pixels at positions corresponding to the overhead view image obtained based on the camera 1 and the overhead view image obtainedbased on the camera 2, and combines the pixel information into one overhead view image. When the combined overhead view image has been produced, the overhead view image combining unit 114 finishes the blending ratio decision processing. The combined overhead view image is then output by transmitting the image to the display 108.

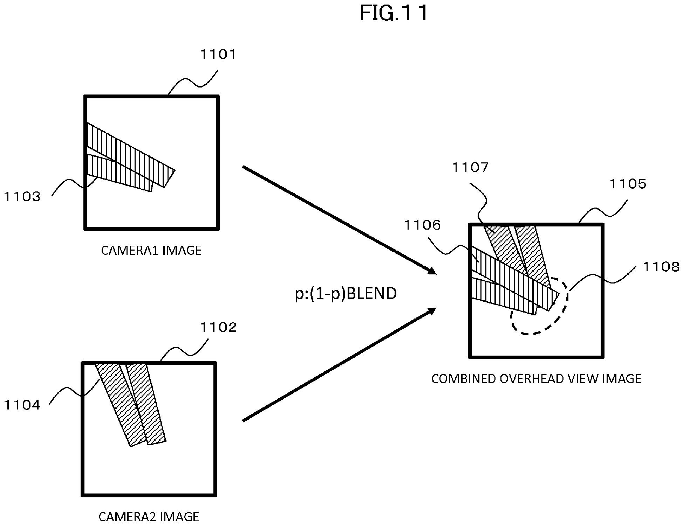

FIG. 11 is a diagram for illustrating a screen example in which overhead view images are combined by blending based on the feature quantities. The example illustrated in FIG. 11 is an example of the processing performed when it is determined in Step S005 of the blending ratio decision processing that the feature quantities are not correlated, and determined in Step S007 that the object is at a position in common, namely, an example of the processing for combining the overhead view images by using the blending ratios decided in Step S008. In the overlapping area of the overhead view image obtained based on the camera 1 and the overhead view image obtained based on the camera 2, a pedestrian leg 1103 photographed by the camera 1 is shown in an overhead view image 1101 obtained based on the camera 1, and a pedestrian leg 1104 photographed by the camera 2 is shown in an overhead view image 1102 obtained based on the camera 2. Because the same overlapping area is photographed, and the pedestrian, who is a three-dimensional object, is present in that area, the legs 1103 and 1104 of the pedestrian extend in different directions to each other.

In this example, the pedestrian leg 1103 and the pedestrian leg 1104 each have a feature quantity in a position 1108 in common. Therefore, the blending ratio "p: (1-p) "betweentheoverhead view image 1101 obtained by the camera 1 and the overhead view image 1102 obtained by the camera 2 is calculated, and based on the calculated blending ratio, the overhead view image combining unit 114 produces a combined overhead view image 1105. As a result, a pedestrian leg 1106 photographed by the camera 1 and a pedestrian leg 1107 photographed by the camera 2 are combined in accordance with their respective blending ratios, and included in combined overhead view image 1105.

Returning to the description of the processing flow, when it is determined that a three-dimensional object is not present in a position in common ("No" in Step S007), the blending ratio specifying unit 113 decides that the image having the larger feature quantity among the image feature quantities Q1 and Q2 is to be employed for the overhead view image (Step S010).

Next, the overhead view image combining unit 114 performs overhead view image combining by using the employed overhead view image (Step S010). Specifically, the overhead view image combining unit 114 produces a combined overhead view image by employing, of the overhead view image obtained based on the camera 1 and the overhead view image obtained based on the camera 2, the image having the larger feature quantity in the overlapping area. When the overhead view image has been produced, the overhead view image combining unit 114 finishes the blending ratio decision processing. The combined overhead view image is then output by transmitting the image to the display 108. Note that, in order to avoid an image near a joint from disappearing due to an erroneous detection, the combined overhead view image produced may be by performing the blend processing by prioritizing the blending ratio of a camera image from which a feature can be extracted.

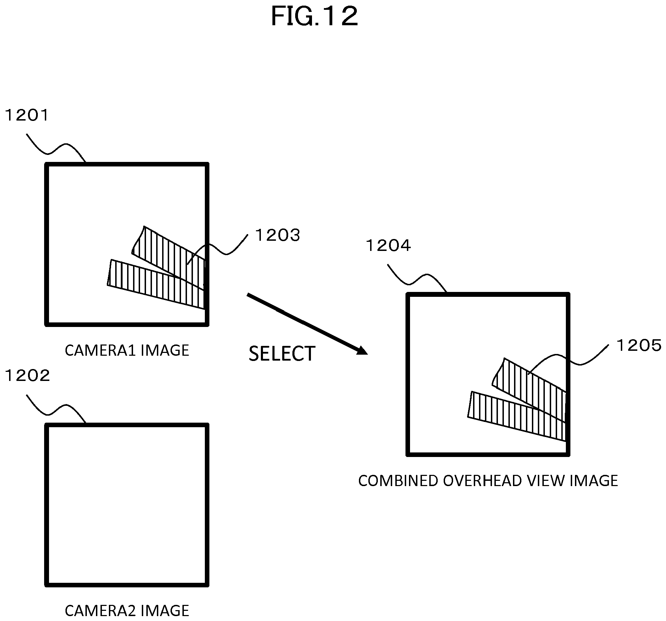

FIG. 12 is a diagram for illustrating a screen example in which overhead view images are combined by selecting an image. The example illustrated in FIG. 12 is an example of the processing performed when it is determined in Step S005 of the blending ratio decision processing that the feature quantities are not correlated, and determined in Step S007 that the object is not at a position in common, namely, an example of the processing for combining the overhead view images by selectively adopting the overhead view image in Step S010. In the overlapping area of the overhead view image obtained based on the camera 1 and the overhead view image obtained based on the camera 2, a pedestrian leg 1203 photographed by the camera 1 is shown in an overhead view image 1201 obtained based on the camera 1. In an overhead view image 1202 obtained based on the camera 2, an image photographed by the camera 2 is shown, but there is no object corresponding to a leg of the pedestrian. This is because although there are no objects in the overlapping area, a pedestrian (three-dimensional object) is present near the camera 1, and that pedestrian appears as an object in the overhead view image 1201 of the camera 1. On the other hand, because there are no objects near the overhead view image 1202 of the camera 2, nothing is shown.

In this example, the overhead view image combining unit 114 produces a combined overhead view image 1205 by employing the overhead view image 1201 photographed by the camera 1. As a result, the pedestrian leg 1203 photographed by the camera 1 is included in the combined overhead view image 1205.

The processing content of the blending ratio decision processing has been described above. Based on the blending ratio decision processing, a combined overhead view image including a region in common can be produced by applying a feature quantity detection condition on a plurality of pieces of image information, each of the plurality of pieces of image information partially having an image obtainedby photographing a region in common from a different viewpoint position, to detect a feature quantity of the region in common, and using the feature quantity of the region in common of each image to specify a weighting for blending an image included in the region in common. In other words, in an overlapping area photographed by a plurality of cameras, a flat pattern drawn on a road and a three-dimensional object can be differentiated by extracting image feature quantities of camera images photographed from different directions, and determining a correlation among the extracted image feature quantities. When a three-dimensional object is present, whether or not the three-dimensional object is present in the overlapping area or is present outside of the overlapping area can be determined by determining a positional overlap of the feature quantities. Further, the blending ratio when overhead view images are combined may be varied in accordance with each of those states, thereby allowing a good overhead view image to be obtained.

The first embodiment has been described above with reference to the drawings. According to the first embodiment, it can be said that the image display device 100 is capable of producing an overhead view image of the entire surroundings of a vehicle by utilizing images photographed by a plurality of cameras to detect obstacles and pedestrians, and capable of, based on the detection results, producing the combined overhead view image of each camera image that the obstacles and pedestrians may easily be shown in the images. In other words, the image display system 1 includes a plurality of image pickup devices each configured to obtain image information partially including an image obtained by photographing a region in common from a different viewpoint position, and an image display device.

The image display device includes a feature quantity detection condition specifying unit configured to specify a feature quantity detection condition to be used as a condition for detecting a predetermined feature quantity relating to image information, a feature quantity detecting unit configured to detect the feature quantity of a region in common by applying the feature quantity detection condition on a plurality of pieces of image information, a blending ratio specifying unit configured to specify a weighting for blending images including the region in common by using the feature quantity of the region in common of each image, and an overhead view image combining unit configured to combine the overhead view images including the region in common by using a blending ratio.

The present invention is not limited to the embodiment described above. The present invention includes various modified examples. For example, the embodiment described above is described in detail in order to facilitate an understanding of the present invention. However, the present invention does not need to include all of the configurations described above. Further, a part of the configurations of a given embodiment may be replaced with the configurations of another embodiment. In addition, the configurations of another embodiment may be added to the configurations of a given embodiment. Still further, other configurations may be added to, deleted from, or replace a part of the configurations of each embodiment.

The image display system 1 according to the present embodiment includes the image display device 100, the camera group 101, and the display 108. However, one or both of the camera group 101 and the display 108 may be configured so as to not be directly managed by the image display system 1. For example, the present invention may be applied in a case in which an overhead view image of a region to be monitored is produced by combining images acquired and transmitted by a plurality of monitoring cameras mounted on positions that are not limited to vehicles (e.g., an exhibit in an art gallery).

In the first embodiment described above, combining is performed by comparing the feature quantities of a plurality of images obtained by photographing a region in common with each other to decide a blending ratio. However, the present invention is not limited to this. For example, in consideration of hysteresis over time, the blending ratio may be gradually changed over time so as to avoid large changes in the blending ratio compared with the previous and subsequent time points.

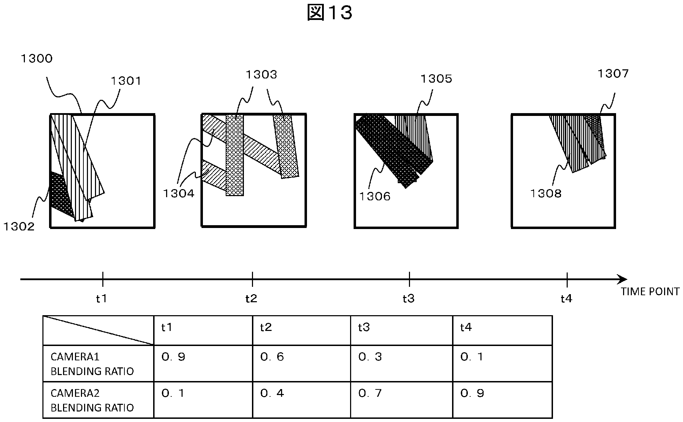

FIG. 13 is a diagram for illustrating an example of changes in the blending ratio based on changes in a three-dimensional object over time. For example, FIG. 13 is an example for illustrating a combined image for a case in which a pedestrian, who is a three-dimensional object, has moved through an overlapping area. In FIG. 13, combined images of a pedestrian are arranged in times series for an overlapping area 1300, which is a region in which the pedestrian is photographed by both the camera 1 and the camera 2, for a case in which the pedestrian walks through the overlapping area 1300 from the left side in the right direction.

At a time point t1, the blending ratio for a pedestrian leg 1301 photographed by the camera 1 and the blending ratio for a pedestrian leg 1302 photographed by the camera 2 are decided based on the image feature quantity (e.g., the shown surface area of the legs), and the images are combined by using, for example, P1=0.9 for the image of the pedestrian photographed by the camera 1 and P2=0.1 for the image of the pedestrian photographed by the camera 2. Setting the blending ratios in this manner enables the image shown as having a larger surface area of the pedestrian leg, namely, the leg 1301 photographed by the camera 1, to be crisply displayed.

At a time point t2, the image feature quantity (surface area) of a pedestrian leg 1303 photographed by the camera 1 and the image feature quantity (surface area) of a pedestrian leg 1304 photographed by the camera 2 are about the same, and hence combining is performed by using blending ratios that are about the same, namely, P1=P2=0.5, or P1=0.6 and P2=0.4, for example.

At a time point t3, the image feature quantity of a pedestrian leg 1306 photographed by the camera 2 is slightly more than the image feature quantity of a pedestrian leg 1305 photographed by the camera 1, and hence combining is performed by using a blending ratio of P1=0.3 for the camera 1 image and a blending ratio of P2=0. 7 for the camera 2 image.

At a time point t4, the image feature quantity of a pedestrian leg 1308 photographed by the camera 2 is substantially more than the image feature quantity of a pedestrian leg 1307 photographed by the camera 1, and hence combining is performed by using a blending ratio of P1=0.1 for the camera 1 image and a blending ratio of P2=0.9 for the camera 2 image. As a result, the leg 1308 photographed by the camera 2, which is shown as having the larger leg surface area, is crisply displayed.

Thus, based on the invention according to the first embodiment, when the same object is photographed by a plurality of cameras, an image that has a higher contrast for the image shown as having a larger surface area is produced by setting the blending ratios based on a relative ratio of the image feature quantities. In addition, in the processing for deciding the blending ratios, the blending ratio specifying unit 113 may be configured to decide the blending ratios by applying Expression (3).

$$\text{Blending ratio } p1(t)=p1(t-1)+k(p1\_calc(t)-p1(t-1))$$

$$\cdots \text{Expression (3)}$$

In other words, a blending ratio p1(t) of the camera 1 at a time point t can be set by adding k-times (k is a number of from 0 to 1) a difference with the blending ratio at a time point (t-1) to the blending ratio at the time point (t-1). In Expression (3), the value of p1_calc (t) is the before-correction blending ratio at the time t calculated based on the feature quantity. More specifically, a blend weighting may be specified for each predetermined period, and weighting may be performed so that a change amount between the blend weightings of a period before or a period after, or the periods before and after, a predetermined period is a predetermined value or less during the blend weighting of each of those predetermined periods.

The blending ratio may also be decided by predicting the brightness at a future time point, and setting so that the blending ratio is a smooth continuum until the predicted brightness.

Note that, in the first embodiment, at the time point t2, when the image feature quantities are about the same between the images, the blending ratios should be set to be the same, namely, P1=P2=0.5. However, in such a case, there is a possibility that the brightness of the image obtained by combining the two images increases, causing the combined image to be less visible. Therefore, in consideration of hysteresis, the display processing may be performed by prioritizing an image whose blending ratio one time point before was larger. Specifically, in the example illustrated in FIG. 13, at the time point t1, which is one time point before the time point t2, P1 has the larger blending ratio. Therefore, in the processing at time point t2, which has an image feature quantity that is about the same, processing is performed that prioritizes P1, and adds a predetermined ratio or value to the detected image feature quantity, or multiplies the detected image feature quantity by a predetermined ratio or value. As a result, for example, the image from camera 1 may be made more visible by setting the blending ratios to P1=0.6 and P2=0.4. At this stage, the value for the next time point may be predicted from the previous value, and the blending ratios may be set so that P1=0.4 and P2=0.6. In this method, when the image feature quantities for the camera 1 and the camera 2 are detected as being about the same, a phenomenon in which the two images become less visible can be reduced by blending the images based on changes in the feature quantities in time series so as to avoid a state in which the blending ratios of the two images are the same (P1=P2=0.5).

In addition, in the case of image information on moving images photographed over a predetermined period, the present invention may also be employed for a method of calculating blending ratios by using motion vectors. In other words, motion vector information on an optical flow is utilized in order to detect image feature quantities, and the blending ratios of the overlapping area are calculated based on the detected image feature quantities to combine the images. The blending ratios are calculated based on the ratio of the sum of the motion vectors by utilizing the motion vectors of a plurality of frames as the feature quantities. Specifically, a sum $\Sigma$Cam 1 of the motion vectors in the image from the camera 1 and a sum $\Sigma$Cam 2 of the motion vectors 1404 in the image from the camera 2 are calculated. The blending ratio P1 of the camera 1 and the blending ratio P2 of the camera 2 are calculated based on Expressions (4) and (5) from the calculated $\Sigma$Cam 1 and $\Sigma$Cam 2.

$$P1=\Sigma\text{Cam } 1/(\Sigma\text{Cam } 1+\Sigma\text{Cam } 2) \cdots \text{Expression (4)}$$

$$P2=\Sigma\text{Cam } 2/(\Sigma\text{Cam } 1+\Sigma\text{Cam } 2) \cdots \text{Expression (5)}$$

In other words, a larger blending ratio is set for a camera image having greater movement. A combined image 1405 including a moving object is produced based on those blending ratios. Based on this method, images with larger movements in the overlapping area can be produced that are crisper and have better contrast.

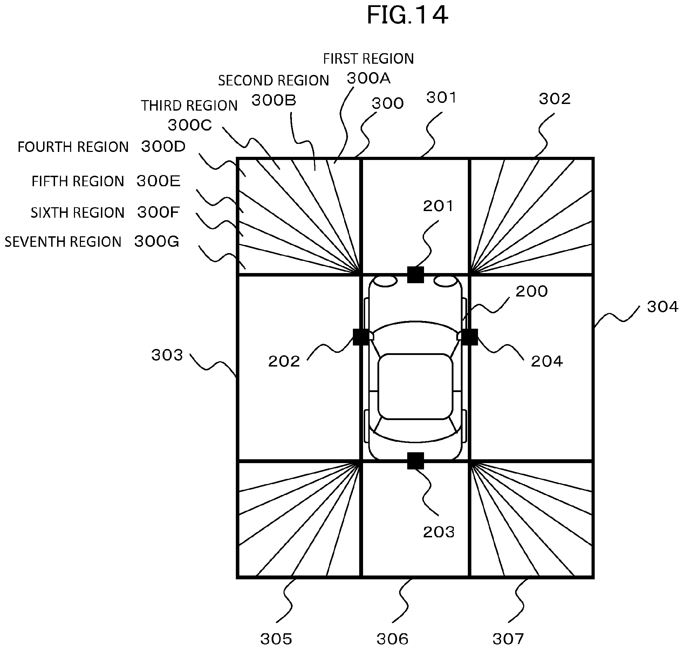

FIG. 14 is a diagram for illustrating a setting example of a region to be photographed by the image display device 100. FIG. 14 can be said to be a modified example of contour detection, to which a method is applied that enables contour detection of a three-dimensional object even more accurately. In FIG. 14, a method is illustrated for increasing the detection accuracy of a three-dimensional object by, of the areas illustrated in FIG. 4, dividing the overlapping areas even more finely, and reducing the deviation between the extension direction and the scanning direction.

In FIG. 14, basically the same configuration as in the first embodiment is illustrated. However, the front left area 300 is further divided into a fan shape, which includes a first region 300A, a second region 300B, a third region 300C, a fourth region 300D, a fifth region 300E, a sixth region 300F, and a seventh region 300G. The blending ratio is fixedly set for each region.

For example, for the first region 300A, the weighted center position is close to the front camera 201 side, and hence the blending ratio of the image from the front camera 201 is P1=0.9, and the blending ratio of the image from the left-side camera 202 is P2=0.1. On the other hand, for the adjacent second region 300B, because the weighted center position is a little further away from the front camera 201, P1=0.8 and P2=0.2. Similarly, the blending ratios for the third to sixth regions are set based on the distance from the front camera 201 and the distance from the left-side camera 202. For the seventh region 300G, because the weighted center position is close to the left-side camera 202, P1=0.1 and P2=0.9. Thus, the blending ratios are set by prioritizing the image from the front camera 201 as the weighted center position is closer to the front camera 201, and prioritizing the image from the left-side camera 202 as the weighted center position is closer to the left-side camera 202. As a result, because for each divided region the images are blended by emphasizing the image from the closer camera, images can be produced that are easier to see. In addition, in each divided region, the blending ratio may be adjusted based on the feature quantity of each camera image.

A part or all of each of the configurations, functions, processing units, processing means, and the like described above may be realized by software for causing a processor to interpret and execute a program for realizing each of those functions. Information on the programs, tables, files, and the like for realizing each function may be stored in a storage device, such as a memory, a hard disk, and a solid-state drive (SSD), or a storage medium, such as an integrated chip (IC) card, a secure digital (SD) card, and a digital versatile disc (DVD).

Further, the control lines and information lines considered to be necessary for the description are illustrated. It is not necessarily the case that all the control lines and information lines necessary for a product are illustrated. In actual practice, almost all the configurations may be considered as being connected to each other.

Further, a part or all of each of the above-mentioned configurations, functions, processing units, and the like may be realized by hardware by, for example, designing those as an integrated circuit. In addition, the technical elements of the above-mentioned embodiments may be applied independently, or may be applied by dividing those elements into a plurality of parts, such as a program portion and a hardware portion.

The present invention has been described above mainly by way of embodiments.

Reference Signs List

1 ⋯ image display system, 100 ⋯ image display device 110 ⋯ control unit, 111 ⋯ feature quantity detection condition specifying unit, 112 ⋯ feature quantity detecting unit, 113 ⋯ blending ratio specifying unit, 114 ⋯ overhead view image combining unit, 120 ⋯ storage unit, 121 ⋯ feature quantity detection condition storing unit, 122 ⋯ blend information storing unit, 130 ⋯ camera control unit

**Claims**

1. An image display device, comprising:

   a feature quantity detection condition specifying unit configured to specify a condition for detecting a predetermined feature quantity for an overhead view image of each image obtained by photographing a region in common from at least two different viewpoints;
   a feature quantity detecting unit configured to detect, by using the specified feature quantity detection condition, the predetermined feature quantity for each of the overhead view images of the images obtained by photographing the region in common;
   a blending ratio specifying unit configured to specify, based on the predetermined feature quantity detected by the feature quantity detecting unit, a blending ratio to be used when blending pixels of the overhead view images of the images obtained by photographing the region in common from the at least two different viewpoints; and
   an overhead view image combining unit configured to produce and output a combined overhead view image by blending the pixels of the overhead view images of the images obtained by photographing the region in common based on the blending ratio specified by the blending ratio specifying unit.

2. An image display device according to claim 1, wherein the feature quantity detection condition specifying unit is configured to specify the feature quantity detection condition based on the region in common and a position of the viewpoint.

3. An image display device according to claim 1, wherein the feature quantity detection condition specifying unit is configured to specify, as a processing condition, extraction of the predetermined feature quantity of each of the overhead view images of the images obtainedby photographing the region in common by scanning in a direction orthogonal to a direction from a predetermined representative point of the region in common toward a position of the viewpoint.

4. An image display device according to claim 1, wherein the feature quantity detection condition specifying unit is configured to specify, as a processing condition, extraction of the feature quantity of each of the overhead view images of the images obtained by photographing the region in common by scanning in a tangential direction of a concentric circle about a position of the viewpoint.

5. An image display device according to claim 1, wherein the feature quantity detection condition specifying unit is configured to specify, as a processing condition, extraction of the feature quantity of an image by rotating and scanning an overhead view image of an image obtained by photographing the region in common so that a direction from a representative point of the region in common toward a position of the viewpoint is a horizontal direction or a vertical direction.

6. An image display device according to claim 1, wherein the blending ratio specifying unit is configured to:

   determine a strength of a correlation among pieces of information on a plurality of the overhead view images relating to the feature quantity of each of the overhead view images of the images obtained by photographing the region in common;
   determine, when it is determined that the correlation is weaker than a predetermined level, whether or not in the region in common there is a region in which the feature quantity of each of the overhead view images of the images obtained by photographing the region in common overlaps by a predetermined degree or more; and switch a blending method based on whether or not the region is present.

7. An image display device according to claim 6, wherein the overhead view image combining unit is configured to:

   set, when it is determined by the blending ratio specifying unit that there is a region in which the feature quantity of each of the overhead view images of the images obtained by photographing the region in common overlaps by the predetermined degree or more, the blending ratio of the image having the larger feature quantity in the overhead view images of the images obtained by photographing the region in common to a larger value; and produce and output a combined overhead view image by blending the pixels of the overhead view images.

8. An image display device according to claim 6, wherein the overhead view image combining unit is configured to produce and output the combined overhead view image by employing, when it is determined by the blending ratio specifying unit that there is not a region in which the feature quantity of each of the overhead view images of the images obtained by photographing the region in common overlaps by the predetermined degree or more, the image having the larger feature quantity in the overhead view images of the images obtained by photographing the region in common.

9. An image display device according to claim 1, wherein the blending ratio specifying unit is configured to:

   determine a strength of a correlation among pieces of information on a plurality of the overhead view images relating to the feature quantity of each of the overhead view images of the images obtained by photographing the region in common; and
   produce and output the combined overhead view image by setting, when it is determined that the correlation is stronger than a predetermined level, the blending ratio of the pixels included in an image to be a larger value for images having a closer distance from a position of a viewpoint to the region in common.

**10.** An image display device according to claim 1,
wherein the overhead view image comprises a moving image photographed for a predetermined period,
wherein the feature quantity detecting unit is configured to detect a motion vector in each image as the predetermined feature quantity of the overhead view image, and
wherein the overhead view image combining unit is configured to set the blending ratio based on a motion vector amount of each image in the region in common.

**11.** An image display device according to claim 1, wherein the overhead view image combining unit is configured to produce and output the combined overhead view image so that the blending ratio of the images in the region in common changes based on a gradient from the region in common toward an adjacent region.

**12.** An image display device according to claim 1, wherein the overhead view image combining unit is configured to:

specify the blending ratio for each predetermined period; and
specify that a change amount between the blending ratio of a period before or a period after, or the periods before and after, the predetermined period be a predetermined value or less during the specification of the blending ratio for each of the predetermined periods.

**13.** An image display system, comprising:

a plurality of image pickup devices each being configured to obtain an overhead view image of an image obtained by photographing a region in common from a different viewpoint from another image pickup device; and
an image display device,
the image display device comprising:

a feature quantity detection condition specifying unit configured to specify a feature quantity detection condition to be used as a condition for detecting a predetermined feature quantity for each overhead view image;
a feature quantity detecting unit configured to detect, by using the specified feature quantity detection condition, the predetermined feature quantity for each of the overhead view images of the images obtained by photographing the region in common;
a blending ratio specifying unit configured to specify, based on the predetermined feature quantity detected by the feature quantity detecting unit, a blending ratio to be used when blending pixels of the overhead view images of the images obtained by photographing the region in common from positions of the different viewpoints; and
an overhead view image combiningunit configured to produce and output a combined overhead view image by blending the pixels of the overhead view images of the images obtained by photographing the region in common based on the blending ratio specified by the blending ratio specifying unit.

# FIG.1

100

**IMAGE DISPLAY DEVICE**

110

**CONTROL UNIT**

111

FEATURE QUANTITY DETECTION CONDITION SPECIFYING UNIT

112

FEATURE QUANTITY DETECTION UNIT

113

BLENDING RATIO SPECIFYING UNIT

114

OVERHEAD VIEW IMAGE COMBINING UNIT

120

**STORAGE UNIT**

121

FEATURE QUANTITY DETECTION CONDITION STORING UNIT

122

BLEND INFORMATION STORING UNIT

130

CAMERA CONTROL UNIT

FIG.2

1  IMAGE DISPLAY SYSTEM

# FIG.3

# FIG.4

# FIG.5

## FIG.6

121  FEATURE QUANTITY DETECTION
CONDITION STORING UNIT

| REGION SPECIFYING INFORMATION | REPRESENTATIVE POINT | VIEWPOINT POSITION SPECIFYING INFORMATION | FEATURE QUANTITY DETECTION CONDITION |
|---|---|---|---|
| 121A | 121B | 121C | 121D |
| A1 | (X1, Y1) | (X0, Y0) | IMAGE ROTATION ANGLEθ |
| . . . | . . . | . . . | . . . |

# FIG.7

122 BLEND INFORMATION STORING UNIT

| REGION SPECIFYING INFORMATION | BLENDING RATIO |
|---|---|
| A1 | CAMERA001：p<br>CAMERA002：1－p |
| ... | ... |

122A  122B

FIG.8

FIG.9

## FIG.10

```
        ( BLENDING RATIO
          DECISION PROCESSING )
                  |
   +--------------------------------+   S001
   | DECIDE PROCESSING CONDITION C1 |
   | BASED ON POSITIONS OF CAMERA1 AND |
   |        OVERLAPPING AREA        |
   +--------------------------------+
                  |
   +--------------------------------+   S002
   | DECIDE PROCESSING CONDITION C2 |
   | BASED ON POSITIONS OF CAMERA2 AND |
   |        OVERLAPPING AREA        |
   +--------------------------------+
                  |
   +--------------------------------+   S003
   | DETECT OBJECT IN OVERLAPPING AREA |
   |  OF CAMERA1 IMAGE BY APPLYING  |
   |    C1(FEATURE QUANTITY Q1)     |
   +--------------------------------+
                  |
   +--------------------------------+   S004
   | DETECT OBJECT IN OVERLAPPING AREA |
   |  OF CAMERA2 IMAGE BY APPLYING  |
   |    C2(FEATURE QUANTITY Q2)     |
   +--------------------------------+
                  |
           < IMAGE FEATURE >   S005
           < QUANTITIES Q1 AND >
           < Q2 HAVE STRONG    >   No
           < CORRELATION?      >
                  | Yes
   +--------------------------------+   S006
   | PRODUCE COMBINED OVERHEAD VIEW |
   | IMAGE OF OVERLAPPING AREA BASED |
   | ON PREDETERMINED BLENDING RATIOS |
   +--------------------------------+
                  |
               ( END )
```

```
           < OBJECTS ARE AT >   S007
           < POSITIONS IN   >
           < COMMON?        >   No
              | Yes
   +-----------------------------+   S008
   | DECIDE BLENDING RATIOS BASED |
   |     ON RATIO OF Q1 AND Q2    |
   +-----------------------------+
              |
   +-----------------------------+   S009
   | PERFORM OVERHEAD VIEW IMAGE |
   | COMBINING INCLUDING THREE-  |
   | DIMENSIONAL EMPHASIS BY USING |
   |      BLENDING RATIOS        |
   +-----------------------------+

   +-----------------------------+   S010
   |    EMPLOY IMAGE HAVING      |
   |   LARGER FEATURE QUANTITY   |
   |    AMONG Q1 AND Q2 FOR      |
   |    OVERHEAD VIEW IMAGE      |
   +-----------------------------+
```

# FIG.11

1101

1103

CAMERA1 IMAGE

p:(1-p)BLEND

1102

1104

CAMERA2 IMAGE

1107

1106

1105

1108

COMBINED OVERHEAD VIEW IMAGE

# FIG.12

1201

CAMERA1 IMAGE

1203

SELECT

1202

CAMERA2 IMAGE

1204

1205

COMBINED OVERHEAD VIEW IMAGE

図13

| | t1 | t2 | t3 | t4 |
|---|---|---|---|---|
| CAMERA1 BLENDING RATIO | 0. 9 | 0. 6 | 0. 3 | 0. 1 |
| CAMERA2 BLENDING RATIO | 0. 1 | 0. 4 | 0. 7 | 0. 9 |

# FIG.14

FIRST REGION
SECOND REGION  300A
THIRD REGION  300B  300  301  302
300C
FOURTH REGION  300D
FIFTH REGION  300E
SIXTH REGION  300F
SEVENTH REGION  300G

201

200

304

303  202  204

203

305  306  307

## INTERNATIONAL SEARCH REPORT

| | International application No. |
| --- | --- |
| | PCT/JP2015/050892 |

**A. CLASSIFICATION OF SUBJECT MATTER**
*H04N7/18*(2006.01)i, *B60R1/00*(2006.01)i, *G06T1/00*(2006.01)i, *G06T3/00* (2006.01)i

According to International Patent Classification (IPC) or to both national classification and IPC

**B. FIELDS SEARCHED**

Minimum documentation searched (classification system followed by classification symbols)
H04N7/18, B60R1/00, G06T1/00, G06T3/00

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2013-074423 A (Aisin Seiki Co., Ltd.), 22 April 2013 (22.04.2013), paragraphs [0031], [0039], [0043]; fig. 4 to 7 & US 2014/0152774 A1 & WO 2013/047012 A1 & EP 2763407 A1 | 1–13 |
| A | JP 2011-205375 A (Fujitsu Ten Ltd.), 13 October 2011 (13.10.2011), paragraph [0121]; fig. 6, 9 to 11 & US 2011/0234801 A1 & CN 102202214 A | 1–13 |
| A | JP 2013-030833 A (Aisin Seiki Co., Ltd.), 07 February 2013 (07.02.2013), paragraphs [0022], [0041] to [0042]; fig. 1, 3 & US 2014/0152827 A1 & WO 2013/015130 A1 & EP 2739050 A1 | 1–13 |

| ☒ Further documents are listed in the continuation of Box C. | ☐ See patent family annex. |
| --- | --- |

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 24 March 2015 (24.03.15) | 07 April 2015 (07.04.15) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (July 2009)

**INTERNATIONAL SEARCH REPORT**

International application No.

PCT/JP2015/050892

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2010-228649 A  (Denso Corp.),<br>14 October 2010 (14.10.2010),<br>paragraph [0044]<br>(Family: none) | 1-13 |
| A | JP 2010-250640 A  (Sanyo Electric Co., Ltd.),<br>04 November 2010 (04.11.2010),<br>paragraphs [0042] to [0062]; fig. 1, 12 to 15<br>& WO 2010/119734 A1 | 1-13 |
| A | JP 2010-134878 A  (Hitachi Automotive Systems, Ltd.),<br>17 June 2010 (17.06.2010),<br>paragraphs [0044] to [0079]; fig. 5<br>& US 2011/0234761 A1    & WO 2010/067770 A1 | 1-13 |

Form PCT/ISA/210 (continuation of second sheet) (July 2009)

**REFERENCES CITED IN THE DESCRIPTION**

**Patent documents cited in the description**

- JP 2014066268 A
- JP 2009289185 A